# EUROPEAN PATENT SPECIFICATION

(11) **EP 2 511 242 B1**
(45) Date of publication and mention of the grant of the patent: **01.03.2017**
(21) Application number: 10835816.9
(22) Date of filing: 16.11.2010
(51) Int. Cl.: C02F 1/44, B01D 61/06, B01D 61/12, B01D 61/58

(54) **WATER DESALINATION DEVICE, AND WATER DESALINATION METHOD**
WASSERENTSALZUNGSVORRICHTUNG UND WASSERENTSALZUNGSVERFAHREN
DISPOSITIF ET PROCÉDÉ DE DESSALEMENT D'EAU

(30) Priority: 09.12.2009 JP 2009279685
(43) Date of publication of application: 17.10.2012
(73) Proprietor: Mitsubishi Heavy Industries, Ltd., Tokyo 108-8215 (JP)
(72) Inventor: ITO, Yoshiaki, Minato-ku, Tokyo 108-8215 (JP); TAKEUCHI, Kazuhisa, Minato-ku, Tokyo 108-8215 (JP); TANAKA, Kenji, Minato-ku, Tokyo 108-8215 (JP); IWAHASHI, Hideo, Minato-ku, Tokyo 108-8215 (JP)
(74) Representative: Intès, Didier Gérard André
(86) International application number: PCT/JP2010/070391
(87) International publication number: WO 2011/070894

(56) References cited:
- EP-A1- 1 614 660
- WO-A1-03/040042
- JP-A- 2005 144 301
- JP-A- 2006 187 719
- JP-A- 2006 305 499
- JP-A- 2008 055 317
- JP-A- 2008 307 487
- JP-A- 2009 279 472
- US-A1- 2007 295 650

## Description

### TECHNICAL FIELD

The present invention relates to a desalination apparatus and a desalination method capable of smoothly and efficiently performing desalination treatment by using a plurality of reverse osmosis membrane devices arranged in series.

### BACKGROUND ART

In a seawater desalination plant, a seawater desalination apparatus (hereinafter, referred to as a desalination apparatus) is used for obtaining fresh water from raw water (seawater) through desalination treatment so that clean water can be used.

Such a desalination apparatus is provided with a pretreatment device that performs dual filtration using sand and anthracite as filter elements in order to remove suspended matters in seawater as raw water. Furthermore, chlorination for adding a chlorine agent (chlorine-containing water) to the raw water is generally carried out on the raw water in order to perform sterilization, eliminate algae, and remove organic matters, iron, manganese, or ammonia. In the chlorination, liquid chlorine, sodium hypochlorite, chlorine obtained by electrolysis of salt water, or the like is used.

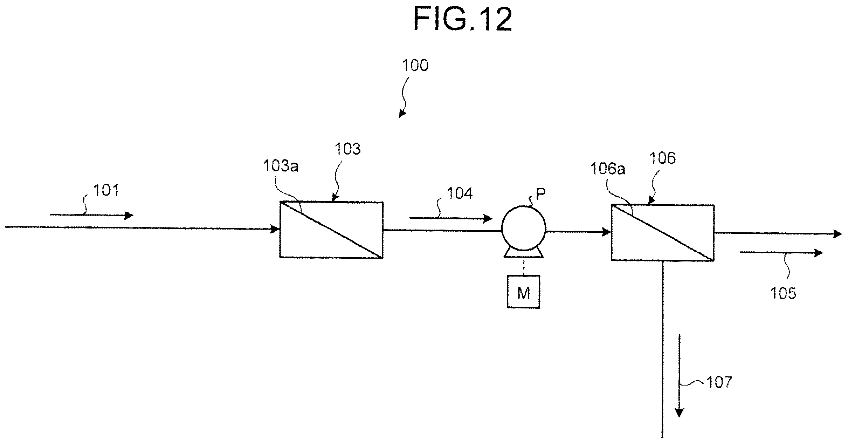

Those obtained through the chlorination and filtration treatment are subjected to the desalination treatment by a reverse osmosis membrane device having a RO membrane. An example of a desalination apparatus that performs conventional chlorination and neutralization treatment is illustrated in FIG. 12.

As illustrated in FIG. 12, a conventional desalination apparatus 100 includes a pretreatment device 103 having a pretreatment membrane 103a that filters suspended matters in raw water 101, and a reverse osmosis membrane device 106 having a reverse osmosis membrane (RO membrane) 106a that removes a salt content from filtrate water 104 supplied from the pretreatment device 103 to produce permeated water 105. The desalination apparatus 100 removes the suspended matters and performs chlorination. In FIG. 12, the reference numeral 107 denotes concentrated water, and the reference symbol P denotes a solution sending pump.

The product water as the permeated water 105 obtained by the desalination apparatus 100 is used as various types of commercial water, such as water for drinking or water for use in factories or plants. However, in recent years, there is a demand for improvement in the water quality of the permeated water as treated water. To meet this demand, the applicants of the present invention have proposed a technology for obtaining high purity permeated water by connecting a plurality of the reverse osmosis membrane devices 106 in series (Non Patent Literature 1).

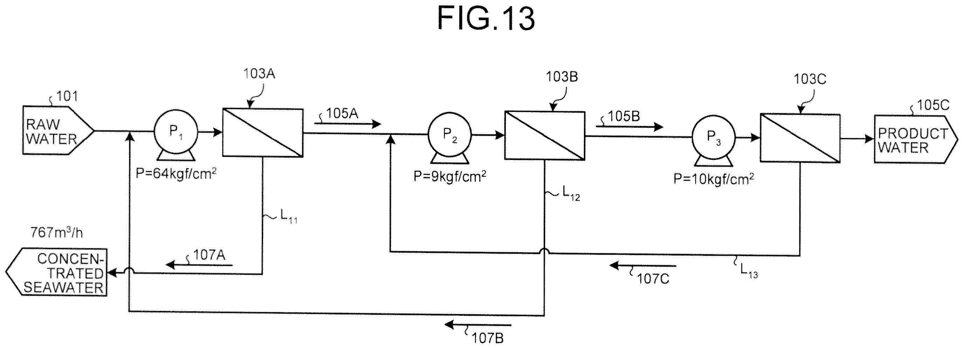

FIG. 13 is a diagram illustrating an example of a plant in which reverse osmosis membrane devices are arranged in multiple stages.

As illustrated in FIG. 13, in the plant proposed in Non Patent Literature 1, when a plurality of reverse osmosis membrane devices is arranged in series, a first reverse osmosis membrane device 103A for high pressure use (6 to 8 MPa) is arranged in the first stage, and second and third reverse osmosis membrane devices 103B and 103C for low pressure use (1 to 2 MPa) are arranged in the second and the third stages, respectively. With this arrangement, desalination is sequentially performed to obtain permeated water 105A and 105B, and thereafter, high purity product water 105C is obtained. In FIG. 13, the reference numerals 107A to 107C denote concentrated water, L₁₁ to L₁₃ denote concentrated water lines, and P₁ to P₃ denote solution sending pumps.

Furthermore, in a serial three-stage process system in which the first reverse osmosis membrane device 103A, the second reverse osmosis membrane device 103B, and the third reverse osmosis membrane device 103C are arranged, the concentrated water 107B and 107C obtained from the second reverse osmosis membrane device 103B and the third reverse osmosis membrane device 103C are recycled for use on the upstream side and returned to inlet sides of the first reverse osmosis membrane device 103A and the second reverse osmosis membrane device 103B through the lines L₁₂ and L₁₃, respectively. Therefore, the permeated water 105A and 105B that are once subjected to the desalination are effectively used. In this process, the reverse osmosis membrane device in the first stage and the reverse osmosis membrane devices in the second and third stages are separately controlled, and the operations are carried out so that each recovery ratio becomes identical (e.g., the recovery ratio in the first stage is 45%, and the recovery ratio in the second and third stages is 90%) (the values shown under the pumps P₁ to P₃ indicate pressure).

Non Patent Literature 1: Mitsubishi Heavy Industries Technical Review Vol. 46 No. 1 (2009), "World's First Large Full Triple-pass RO Seawater Desalination Plant"

### DISCLOSURE OF INVENTION

### PROBLEM TO BE SOLVED BY THE INVENTION

However, the membrane performance of the RO membrane of the reverse osmosis membrane device changes depending on the temperature such that the amount of product water increases as the temperature increases at the same supply pressure. Therefore, there is a demand for efficient operation control so that operations can be performed with constant recovery ratio regardless of the change in the temperature.

Furthermore, energy saving in the plant as a whole is also demanded, leading to a demand for a desalination method capable of improving system efficiency and energy efficiency.

In view of the above problems, an object of the present invention is to provide a desalination apparatus and a desalination method capable of improving system efficiency and energy efficiency.

### MEANS FOR SOLVING PROBLEM

According to an aspect of the present invention, a desalination apparatus includes: a high-pressure first reverse osmosis membrane device having a first reverse osmosis membrane that removes a salt content from raw water supplied with predetermined pressure to produce first permeated water; a low-pressure second reverse osmosis membrane device having a second reverse osmosis membrane that removes a salt content in the first permeated water supplied from the first reverse osmosis membrane device to produce second permeated water; a first flow regulation valve that is mounted in a discharge line for discharging first concentrated water supplied from the first reverse osmosis membrane device and regulates flow rate of the first concentrated water; a second flow regulation valve that is mounted in a first return line for returning second concentrated water supplied from the second reverse osmosis membrane device to a preceding stage of the first reverse osmosis membrane device and regulates flow rate of the second concentrated water; and a control device that measures a supply temperature of the raw water by a thermometer, and controls the first flow regulation valve and the second flow regulation valve depending on the measured temperature. When the measured temperature of the raw water is lower than a set temperature, the control device regulates the first flow regulation valve to maintain a discharge amount of the first concentrated water constant and regulates the second flow regulation valve to reduce the flow rate of the second concentrated water to be returned so as to perform operation such that supply flow rate for the first reverse osmosis membrane device is controlled to be lower than supply flow rate applied at an increased temperature and predetermined product water recovery ratio is maintained.

Advantageously, the desalination apparatus further includes a third flow regulation valve that is mounted in a second return line for returning a part of the second permeated water to a preceding stage of the second reverse osmosis membrane device and regulates the flow rate of the second permeated water.

Advantageously, the desalination apparatus further includes: a third reverse osmosis membrane device having a third reverse osmosis membrane that removes a salt content in the second concentrated water to produce third permeated water; and a fourth flow regulation valve that is mounted in a third return line for returning the third permeated water to a preceding stage of the second reverse osmosis membrane device and regulates flow rate of the third permeated water.

Advantageously, the desalination apparatus further includes a fifth flow regulation valve that is mounted in a first bypass for guiding a part of the first permeated water to a subsequent stage of the second reverse osmosis membrane device and regulates the flow rate of the first permeated water.

Advantageously, the desalination apparatus further includes: a first manual valve that is installed in a preceding stage of the first reverse osmosis membrane device and allows manual regulation of flow rate at the initial time of activation start; a second manual valve that is installed in a preceding stage of the second reverse osmosis membrane device and allows manual regulation of flow rate at the initial time of activation start; and a three-way valve that is installed between the first reverse osmosis membrane device and the second manual valve and performs water discharge treatment until predetermined pressure is obtained at the initial time of activation start.

Advantageously, the desalination apparatus further includes an energy recovery device that is mounted in a line for discharging the first concentrated water and that recovers pressure.

Advantageously, the desalination apparatus further includes a low-pressure reverse osmosis membrane device arranged in series in a subsequent stage of the low-pressure second reverse osmosis membrane device.

According to another aspect of the present invention, a desalination method implemented by a plurality of reverse osmosis membrane devices arranged in series for performing desalination treatment on raw water, the desalination method includes measuring a supply temperature of the raw water. When the supply temperature of the raw water is lower than a set value, the method further includes maintaining a discharge amount of concentrated water supplied from a first reverse osmosis membrane device constant; and reducing flow rate of second concentrated water supplied from a second reverse osmosis membrane device so as to perform operation such that supply flow rate for the first reverse osmosis membrane device is controlled to be lower than flow rate used at an increased temperature and predetermined product water recovery ratio is maintained.

Advantageously, in the desalination method further includes: returning a part of second permeated water supplied from the second reverse osmosis membrane device to a preceding stage of the second reverse osmosis membrane device; and regulating flow rate for returning the second permeated water depending on a temperature difference.

Advantageously, in the desalination method, the reverse osmosis membrane devices include a third reverse osmosis membrane device having a third reverse osmosis membrane that removes a salt content in the second concentrated water to produce third permeated water. The desalination method further includes: returning the third permeated water to a preceding stage of the second reverse osmosis membrane device; and regulating flow rate for returning third concentrated water depending on a temperature difference.

Advantageously, the desalination method further includes: sending a part of the first permeated water from the first reverse osmosis membrane device to a subsequent stage of the second reverse osmosis membrane device; and regulating flow rate for sending the first permeated water depending on a temperature difference.

### EFFECT OF THE INVENTION

According to the present invention, it is possible to perform desalination treatment with increased system efficiency and energy efficiency.

### BRIEF DESCRIPTION OF DRAWINGS

FIG. 1A is a schematic diagram of a desalination apparatus according to a first embodiment.
FIG. 1B is a schematic diagram of the desalination apparatus according to the first embodiment in summer and winter.
FIG. 2 is a schematic diagram of a desalination apparatus according to a second embodiment.
FIG. 3 is a schematic diagram of a desalination apparatus according to a third embodiment.
FIG. 4 is a schematic diagram of a desalination apparatus according to a fourth embodiment.
FIG. 5 is a schematic diagram of a desalination apparatus according to a fifth embodiment.
FIG. 6 is a schematic diagram of a desalination apparatus according to a sixth embodiment.
FIG. 7 is a relationship diagram of the flow rate and the pressure in a high-pressure pump performance curve.
FIG. 8 is a relationship diagram of the flow rate and the pressure in a low-pressure pump performance curve.
FIG. 9 is a schematic diagram of a desalination apparatus according to a reference example of the present invention.
FIG. 10 is a diagram illustrating operating points in summer and winter on a high-pressure pump performance curve according to the reference example.
FIG. 11 is a schematic diagram of a desalination apparatus according to a seventh embodiment.
FIG. 12 is a schematic diagram of a desalination apparatus according to the conventional technology.
FIG. 13 is a schematic diagram of another desalination apparatus according to the conventional technology.

### BEST MODE(S) FOR CARRYING OUT THE INVENTION

Exemplary embodiments of the present invention will be described in detail below with reference to the accompanying drawings. The present invention is not limited by the embodiments. Constituent elements in the embodiments include elements that can readily be conceived by a person skilled in the art, or elements being substantially similar thereto.

### [First Embodiment]

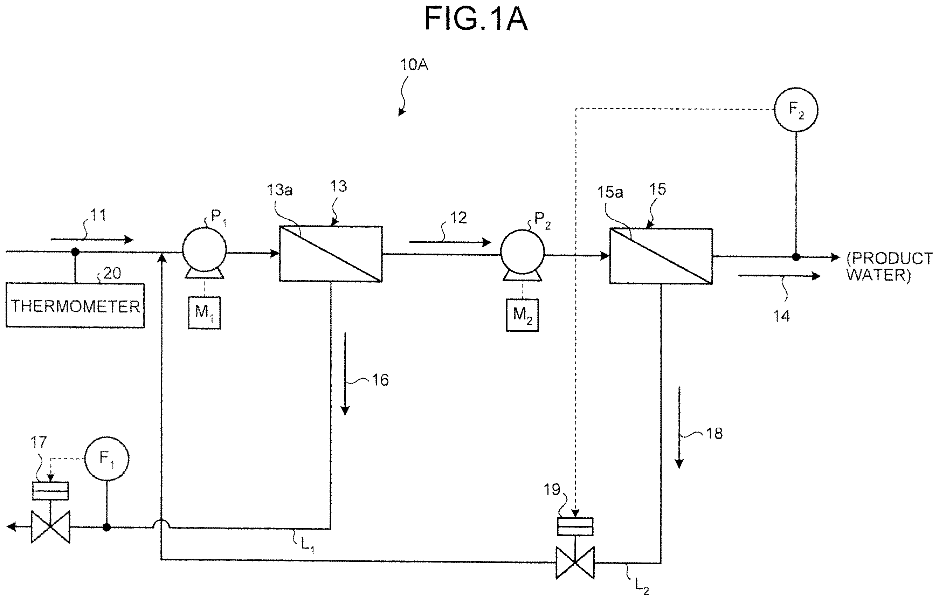

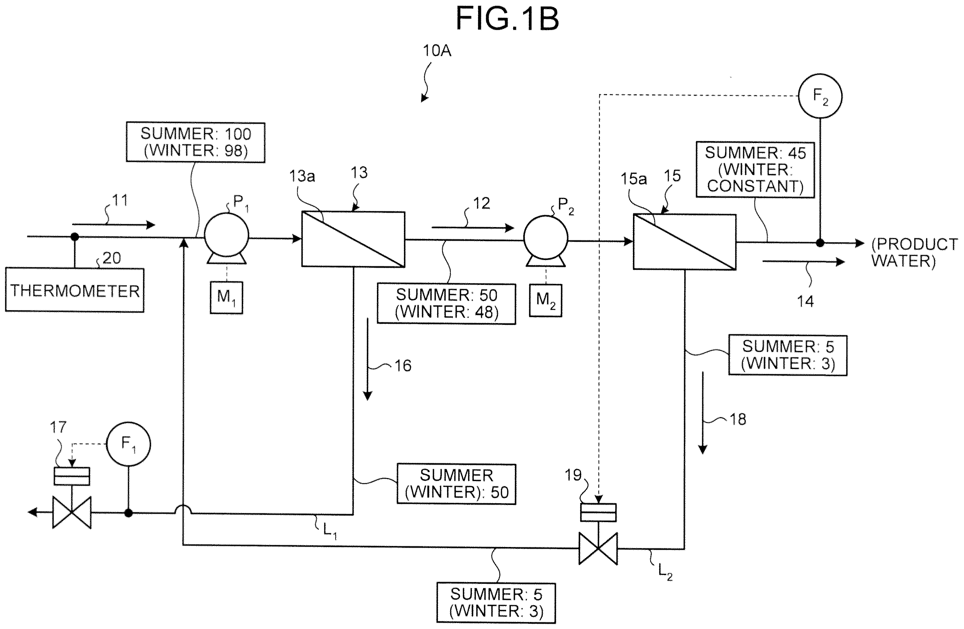

A desalination apparatus according to a first embodiment of the present invention will be described below with reference to the drawings. FIGS. 1A and 1B are schematic diagrams of the desalination apparatus according to the first embodiment. As illustrated in FIG. 1A, a desalination apparatus 10A according to the embodiment includes a first reverse osmosis membrane device 13 having a first reverse osmosis membrane (RO membrane) 13a that removes a salt content from raw water 11 supplied with predetermined pressure to produce first permeated water 12, a second reverse osmosis membrane device 15 having a second reverse osmosis membrane (RO membrane) 15a that removes a salt content in the first permeated water 12 supplied from the first reverse osmosis membrane device 13 to produce second permeated water 14, a first flow regulation valve 17 that is mounted in a discharge line L₁ of first concentrated water 16 supplied from the first reverse osmosis membrane device 13 and regulates the flow rate of the first concentrated water 16, a second flow regulation valve 19 that is mounted in a first return line L₂ for returning second concentrated water 18 supplied from the second reverse osmosis membrane device 15 to the preceding stage of the first reverse osmosis membrane device 13 and regulates the flow rate of the second concentrated water 18, and a control device (not shown) that measures a supply temperature (T) of the raw water 11 by using a thermometer 20 and controls the first flow regulation valve 17 and the second flow regulation valve 19 depending on the measured temperature. In winter in which the temperature of the raw water 11 is low (e.g., 26°C) according to the measurement result of the thermometer 20, the desalination apparatus 10A regulates the first flow regulation valve 17 to maintain the discharge amount of the first concentrated water 16 constant and regulates the second flow regulation valve 19 to reduce the return amount of the second concentrated water 18 so as to perform an operation such that the supply flow rate for the first reverse osmosis membrane device 13 is controlled to be lower than that in summer in which the temperature is high (e.g., 32°C) and a predetermined product water recovery ratio is maintained to a predetermined amount. The second flow regulation valve 19 is used for adjusting the amount of product water to the rated flow rate. In FIG. 1A, the reference symbols F₁ and F₂ denote flow meters, P₁ and P₂ denote solution sending pumps, and M₁ and M₂ denote solution sending pump motors.

The first reverse osmosis membrane device 13 is a high-pressure reverse osmosis membrane device, and may be a "hollow fiber membrane" type reverse osmosis membrane device that is molded into a hollow fiber-like shape having a thickness like pasta and that filters from outside to inside, or a "spiral membrane" type reverse osmosis membrane device in which a sheet of filtration membrane is overlaid with a strong mesh support to keep its strength with there edges bonded to form an envelope, the envelope is then wound in a Swiss roll fashion, and pressure is applied from its cross-section direction.

FIG. 1B is a schematic diagram illustrating an example for explaining a difference in the flow rate (represented by units) between summer and winter in the desalination apparatus according to the first embodiment.

As illustrated in FIG. 1B, in summer (the temperature of the raw water 11 is 32°C), assuming that the amount of the raw water 11 supplied to the first reverse osmosis membrane device 13 is the supply amount of 100 units (raw water of 95 units + returned water of 5 units) and the recovery ratio for the first reverse osmosis membrane device 13 in the first stage with respect to the supply amount is 50%, the filtered amount of the first permeated water 12 that is filtered through the RO membrane 13a becomes 50 units, so that the first concentrated water 16 of 50 units is obtained.

Furthermore, assuming that the amount of the first permeated water 12 supplied to the second reverse osmosis membrane device 15 is the supply amount of 50 units and the recovery ratio for the second reverse osmosis membrane device 15 in the second stage with respect to the supply amount is 90%, the filtered amount of the second permeated water 14 that is filtered through the RO membrane 15a becomes 45 units, so that the second concentrated water 18 of 5 units is obtained.

Regarding the performance level of the pump in summer, because water can easily be permeated in summer, it is not necessary to use high-performance pump of 7.0 MPa that is normally used in winter, and it is possible to use a pump of about 6.6 MPa.

When a decreased temperature of the raw water 11 is measured by the thermometer 20 (decreased by 5°C or more than that in summer) and a winter state is confirmed, the first flow regulation valve 17 is regulated to reduce the recovery ratio for the first reverse osmosis membrane device 13 so that the amount of the raw water 11 to be supplied to the first reverse osmosis membrane device 13 becomes the supply amount of 98 units (95+3) so as to maintain the first concentrated water 16 constant. Accordingly, the filtered amount of the first permeated water 12 that is filtered through the RO membrane 13a is lowered to 48 units, so that the first concentrated water 16 of 50 units is obtained.

Furthermore, when the second flow regulation valve 19 is slightly closed so that the recovery amount for the second reverse osmosis membrane device 15 can be maintained to 45 units similarly to that in summer with respect to the supply amount of 48 units as the amount of the first permeated water 12 to be supplied to the second reverse osmosis membrane device 15, the filtered amount of the second permeated water 14 that is filtered through the RO membrane 15a becomes 45 units, so that the second concentrated water 18 of 3 units is obtained.

In this manner, when operating conditions are compared between summer (32°C) and winter (26°C), the treatment amount in winter (95 units + 3 units = 98 units) decreases compared to the treatment amount in summer (95 units + 5 units = 100 units) by reducing the return amount of the second concentrated water 18 (5 units → 3 units) in winter.

Due to the decrease in the treatment amount, the head pressure of the high-pressure booster pump P₁ increases.

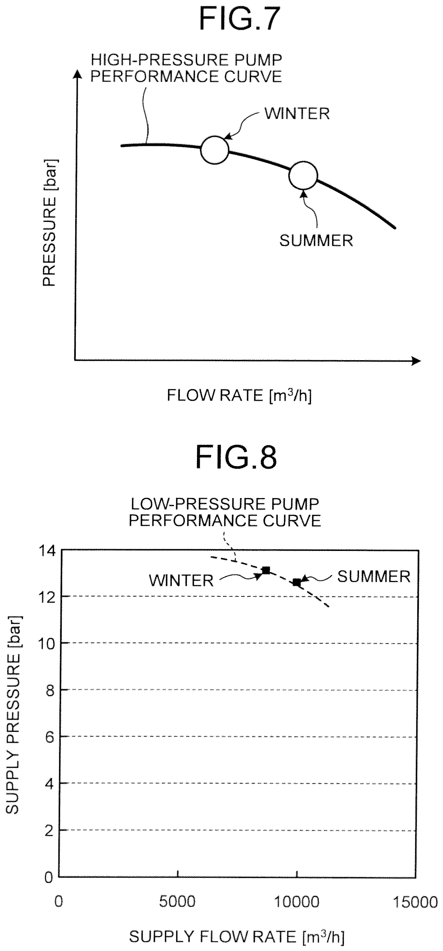

The relationship between the flow rate and the pressure in the high-pressure pump performance curve is illustrated in FIG. 7.

Because the pressure increases in winter compared to that in summer, the pressure matches the high-pressure pump performance curve illustrated in FIG. 7, so that a pump operation can efficiently be performed.

Therefore, although the ratio of permeated water that passes through the RO membrane 13a decreases in winter, the decrease can be compensated for by the reduced supply amount (from 100 units to 98 units).

Furthermore, because the treatment amount decreases in winter, the pressure increases according to the high-pressure pump performance curve. Therefore, the pump designed under the conditions for summer (the pump performance of, for example, 6.6 MPa) can be used, enabling to use the pump throughout the year including summer and winter.

When a desalination operation is performed by using the desalination apparatus described above, the temperature of the raw water 11 is firstly measured by the thermometer 20 to check whether a mode is a summer mode or a winter mode. Thereafter, control is performed to maintain or change the mode.

Subsequently, the control device not illustrated controls to set a predetermined operating condition, and performs regulation control so that the filtered amount of water to be supplied to the first reverse osmosis membrane device 13 and the second reverse osmosis membrane device 15 becomes a set value by using the first flow regulation valve 17 and the second flow regulation valve 19 mounted in the line L₁ and the line L₂, respectively. This regulation control is performed depending on either the summer mode or the winter mode to stably produce high-quality product water.

According to the embodiment, it is explained that a temperature difference is 6°C assuming that the temperature is 32°C in summer and 26°C in winter. However, the present invention is not limited to this example. It is possible to change the operation mode based on a predetermined temperature difference (e.g., 3°C to 5°C or more) through the control by the control unit.

According to the present invention, even when the temperature difference is 1°C, it is possible to perform the desalination treatment with improved system efficiency and energy efficiency.

### [Reference Example]

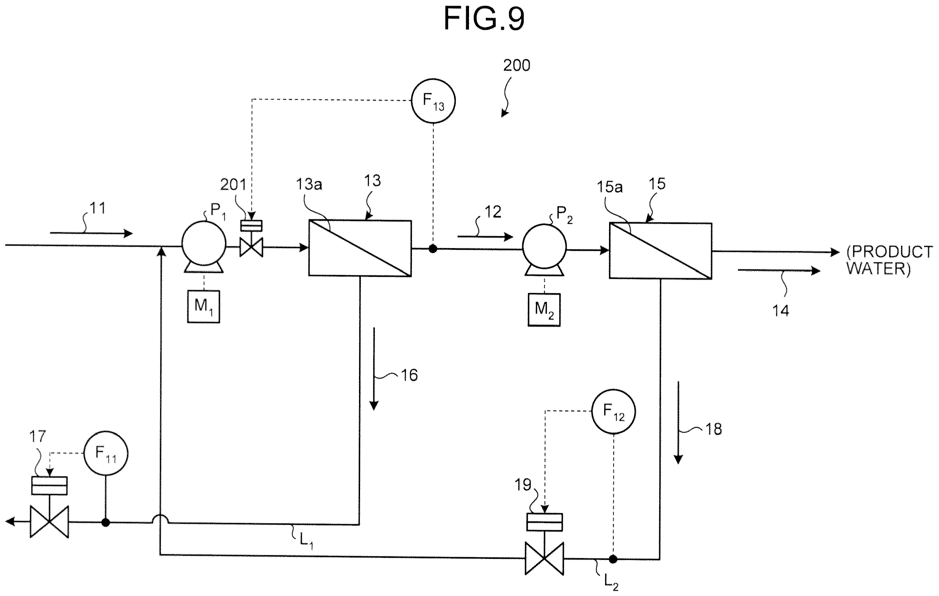

FIG. 9 is a schematic diagram of a desalination apparatus according to a reference example of the present invention.

As illustrated in FIG. 9, a desalination apparatus 200 according to the reference example is different from the desalination apparatus of the first embodiment in that a pressure control valve (PCV) 201 for controlling pressure is installed on the inlet side of the first reverse osmosis membrane device 13.

According to the reference example, because the membrane performance of the RO membrane 13a of the first reverse osmosis membrane device 13 changes depending on the temperature such that the amount of product water increases as the temperature increases at the same supply pressure, the pressure control valve is installed so that an operation can be performed with constant recovery ratio (90%) regardless of the change in the temperature. In FIG. 9, the reference symbols F₁₁ to F₁₃ denote flow meters.

In this case, a high-performance booster pump is provided that can achieve the required amount of water while the pressure control valve (PCV) 201 is fully opened in winter in which the temperature generally becomes the lowest, and the pressure is controlled to be lowered by slightly closing the pressure control valve (PCV) 201 in summer in which the temperature increases, so that the operation can be performed with constant recovery ratio.

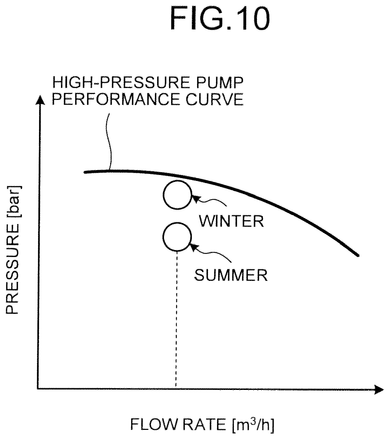

FIG. 10 is a diagram illustrating operating points in summer and winter on the high-pressure pump performance curve. According to the reference example, as illustrated in FIG. 10, when the flow rate through the pump is made constant, the operations in winter and summer are regulated by controlling the pressure, and the operation is performed with lower pressure in summer than in winter.

However, with installation of the pressure control valve (PCV) 201, it is difficult to avoid pressure drop (about 0.3 MPa) when the valve is fully opened at a low temperature, and when the pressure of, for example, 7.0 MPa as the design value is necessary, a high-performance pump of 7.3 MPa is needed as the booster pump.

Furthermore, because the pressure control valve (PCV) 201 is closed in summer in which a temperature is high, the pressure drop is even increased.

The pressure drop due to the open and close operation of the pressure control valve (PCV) 201 turns into energy that does not contribute to the desalination, so that the energy is wasted, resulting in reduced system efficiency in the desalination plant, which is a problem.

Furthermore, when the pressure on the inlet side of the first reverse osmosis membrane device 13 is controlled to be lowered, the pressure of the first concentrated water 16 is also reduced. Therefore, when an energy recovery device or the like is installed to recover the pressure to the concentrated water line, the recovery amount of energy is also reduced, which is another problem.

As described above, according to the desalination apparatus 200 of the reference example, the flow rate in winter with a bad operating condition is determined first, and the pump performance (7 MPa) is fixed based on the determined flow rate. In contrast, according to the present invention, it is possible to perform an operation in winter with the pump performance (e.g., 6.6 MPa) determined in summer.

Therefore, according to the present invention, it is not necessary to install a pump with performance equal to or higher than the rated performance (7.3 MPa when the rated performance is 7 MPa) when the pressure control valve (PCV) 201 is installed as in the desalination apparatus 200 according to the reference example. Consequently, cost for the pump at the time of installation can be reduced, enabling to reduce initial cost.

### (Comparison with the reference example)

According to the present invention, the pressure control valve (PCV) is not needed, so that it is not necessary to perform control by fixing the flow rate as with the installation of the pressure control valve (PCV).

Consequently, the energy loss due to the pressure drop with use of the pressure control valve (PCV) does not occur, enabling to operate the desalination plant with good energy efficiency.

Furthermore, according to the present invention, the first concentrated water 16 is controlled to be maintained constant, so that the pressure variation can hardly occur. Therefore, even when an energy recovery device (not shown) or the like is installed for recovering the pressure, it is possible to stably recover the energy.

As for the energy recovery device, known devices may be used, such as a Pelton Wheel energy recovery device, a Turbochager energy recovery device, a PX (Pressure Exchanger) energy recovery device, and a DWEER (Dual Work Energy Exchanger) energy recovery device.

### [Second Embodiment]

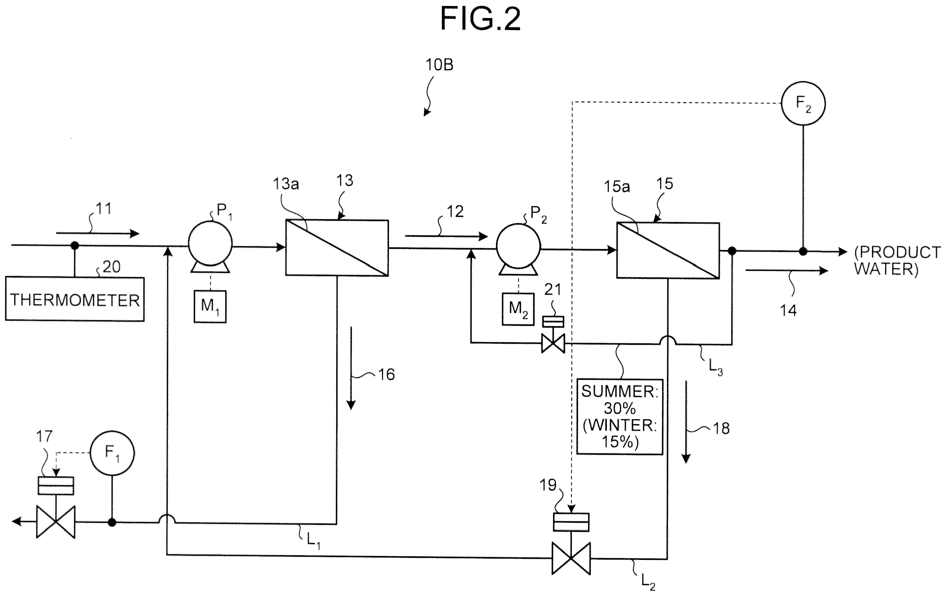

A desalination apparatus according to a second embodiment of the present invention will be described below with reference to the drawings. FIG. 2 is a schematic diagram of the desalination apparatus according to the second embodiment. The components identical to those of the desalination apparatus according to the first embodiment are denoted by identical reference numerals, and explanation thereof is not repeated.

As illustrated in FIG. 2, a desalination apparatus 10B of the second embodiment additionally includes, in the apparatus of the first embodiment, a return line L₃ for returning a part of the second permeated water 14 from the second reverse osmosis membrane device 15 to the upstream side, and a third flow regulation valve 21 mounted in the return line L₃.

With the installation of the return line L₃, the second permeated water 14 is returned to the upstream side such that the return amount in summer is increased by 15% than in winter.

Because the low-pressure pump property of the low-pressure booster pump P₂ remains almost unchanged, when the return amount is set to 30% (15%) in summer and 15% (0%) in winter, the flow rate is reduced in winter compared to the flow rate in summer, so that the head pressure of the low-pressure booster pump P₂ increases.

FIG. 8 is a relationship diagram of the flow rate and the pressure in the low-pressure pump performance curve. As illustrated in FIG. 8, because the pressure increases in winter, the operation in accordance with the low-pressure performance curve is possible, so that the seawater desalination treatment can be performed reliably and stably.

Furthermore, because the second permeated water 14 is re-subjected to the desalination treatment by the second reverse osmosis membrane device 15, the water quality of the product water can be improved.

### [Third Embodiment]

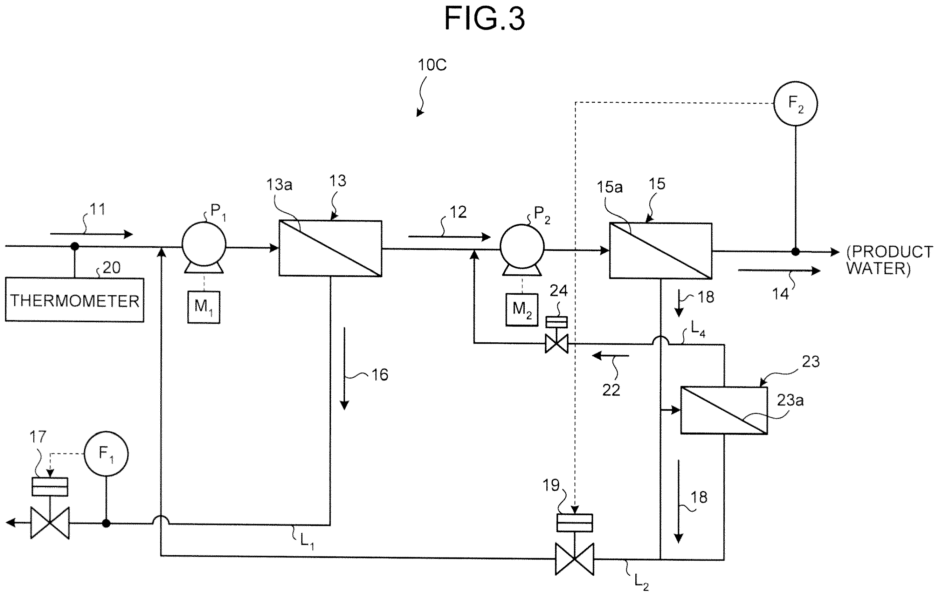

A desalination apparatus according to a third embodiment of the present invention will be described below with reference to the drawings. FIG. 3 is a schematic diagram of the desalination apparatus according to the third embodiment. The components identical to those of the desalination apparatus according to the first embodiment are denoted by identical reference numerals, and explanation thereof is not repeated.

As illustrated in FIG. 3, a desalination apparatus 10C according to the embodiment additionally includes, in the apparatus of the first embodiment, a third reverse osmosis membrane device 23 having a third reverse osmosis membrane (RO membrane) 23a that removes a salt content in the second concentrated water 18 supplied from the second reverse osmosis membrane device 15 to produce third permeated water 22, a return line L₄ for returning the third permeated water 22 to the upstream side, and a fourth flow regulation valve 24 mounted in the return line L₄.

With the installation of the return line L₄, the third permeated water 22 is returned to the upstream side such that the return amount is increased by 15% in summer than in winter.

Consequently, the seawater desalination treatment can be performed reliably and stably similarly to the second embodiment.

### [Fourth Embodiment]

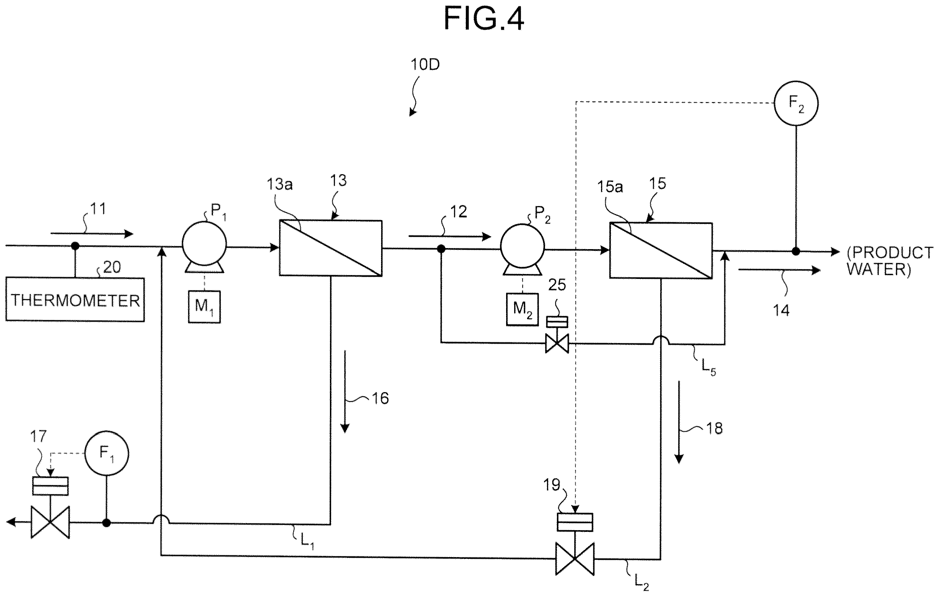

A desalination apparatus according to a fourth embodiment of the present invention will be described below with reference to the drawings. FIG. 4 is a schematic diagram of a desalination apparatus according to the fourth embodiment. The components identical to those of the desalination apparatus according to the first embodiment are denoted by identical reference numerals, and explanation thereof is not repeated.

As illustrated in FIG. 4, a desalination apparatus 10D according to the embodiment additionally includes, in the apparatus of the first embodiment, a bypass line L₅ for causing a part of the first permeated water 12 supplied from the first reverse osmosis membrane device 13 to bypass the second reverse osmosis membrane device 15, and a fifth flow regulation valve 25 mounted in the bypass line L₅.

In winter, a part of the first permeated water 12 is caused to bypass the second reverse osmosis membrane device 15 by using the bypass line L₅.

The bifurcation for causing a part of the first permeated water 12 to bypass the second reverse osmosis membrane device 15 may be performed by pipe arrangement or by using two outlets (on the upstream and downstream sides) of a vessel for permeated water.

The control on the flow rate is switched between summer and winter by measuring the temperature of the raw water 11 by the thermometer 20. When the bypass is used, the bypass flow rate is controlled by using the fifth flow regulation valve 25 mounted in the bypass line L₅.

### [Fifth Embodiment]

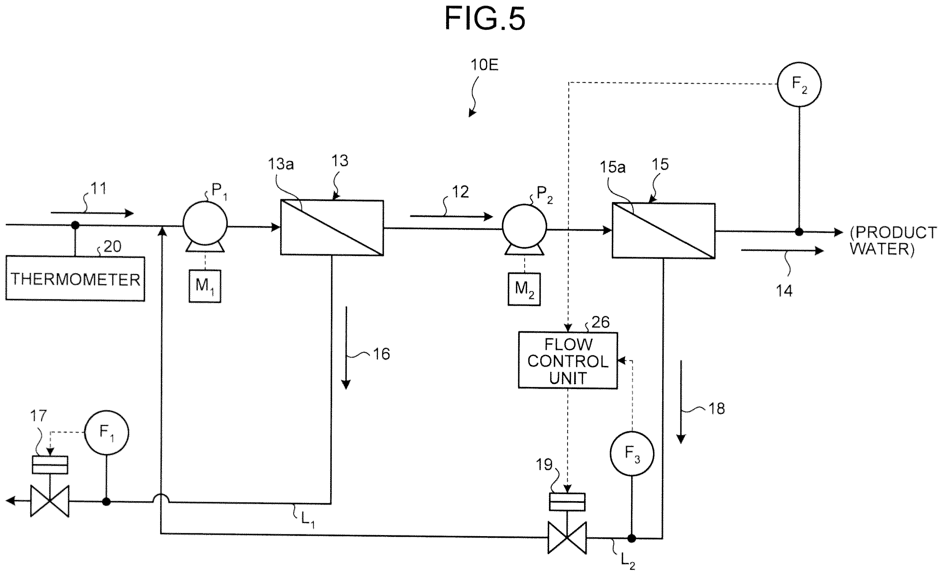

A desalination apparatus according to a fifth embodiment of the present invention will be describe below with reference to the drawings. FIG. 5 is a schematic diagram of the desalination apparatus according to the fifth embodiment. The components identical to those of the desalination apparatus according to the first embodiment are denoted by identical reference numerals, and explanation thereof is not repeated.

As illustrated in FIG. 5, a desalination apparatus 10E according to the embodiment additionally includes, in the apparatus of the first embodiment, a flow meter F₃ for measuring the flow rate of the second concentrated water 18 supplied from the second reverse osmosis membrane device 15 and a flow control unit 26 that controls the second flow regulation valve 19 based on the measurement result of the flow meter F₃.

According to the first embodiment, because the flow rate of the second concentrated water 18 is not controlled and its operation is left to the nature, the flow rate may exceed the design range of the plant. In particular, when the flow rate of the second concentrated water 18 decreases, the recovery ratio for the second reverse osmosis membrane device 15 increases, leading to scale deposition. In this case, by measuring the flow rate of the second concentrated water 18 by the flow meter F₃, and adjusting the flow rate of the second concentrated water 18 so as not to exceed the design range, it is possible to stably perform the desalination treatment without scale deposition.

### [Sixth Embodiment]

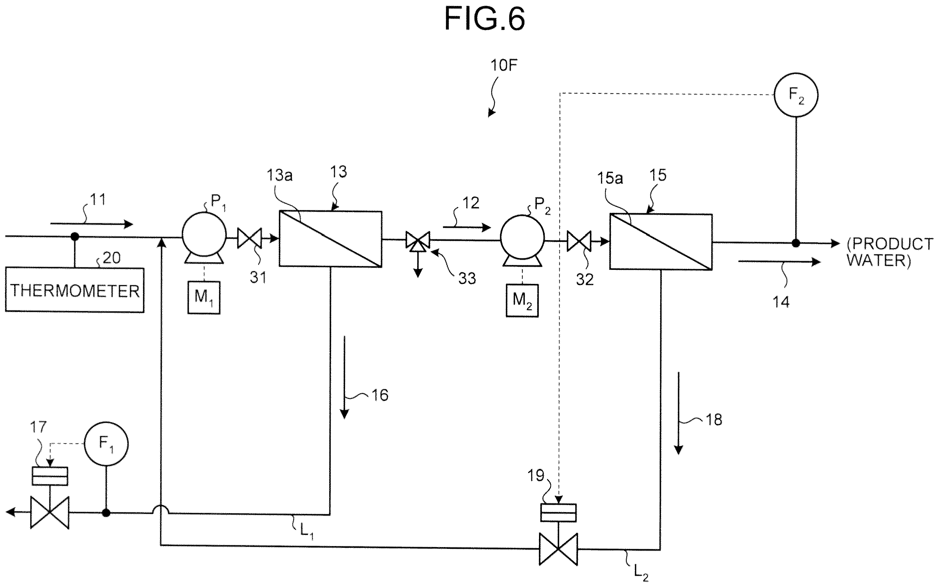

A desalination apparatus according to a sixth embodiment of the present invention will be described below with reference to the drawings. FIG. 6 is a schematic diagram of the desalination apparatus according to the sixth embodiment. The components identical to those of the desalination apparatus according to the first embodiment are denoted by identical reference numerals, and explanation thereof is not repeated.

As illustrated in FIG. 6, a desalination apparatus 10F according to the embodiment additionally includes, in the apparatus of the first embodiment, a first manual valve 31 that is installed in the preceding stage of the first reverse osmosis membrane device 13 and allows manual regulation of the flow rate at the initial time of activation start, a second manual valve 32 that is installed in the preceding stage of the second reverse osmosis membrane device 15 and allows manual regulation of the flow rate at the initial time of activation start, and a three-way valve 33 that is installed between the first reverse osmosis membrane device 13 and the second manual valve 32 and performs water discharge treatment until predetermined pressure is obtained at the initial time of activation start.

With the installation of the first manual valve 31 and the second manual valve 32, the valves are gradually opened until they are fully opened, so that activation and deactivation of the plant can easily be performed.

Furthermore, with use of the three-way valve 33, the first permeated water 12 is discharged and wait time is taken until the low-pressure booster pump P₂ reaches predetermined inlet pressure, and thereafter, after it is confirmed that the first permeated water 12 approximately reaches the inlet pressure of the low-pressure booster pump P₂, the three-way valve 33 is closed to supply the whole amount of the first permeated water 12 toward the second reverse osmosis membrane device 15 side.

Therefore, it is possible to stably prevent the pressure variation at the initial time of activation and to stably perform the startup operation without installing an intermediate tank.

### [Seventh Embodiment]

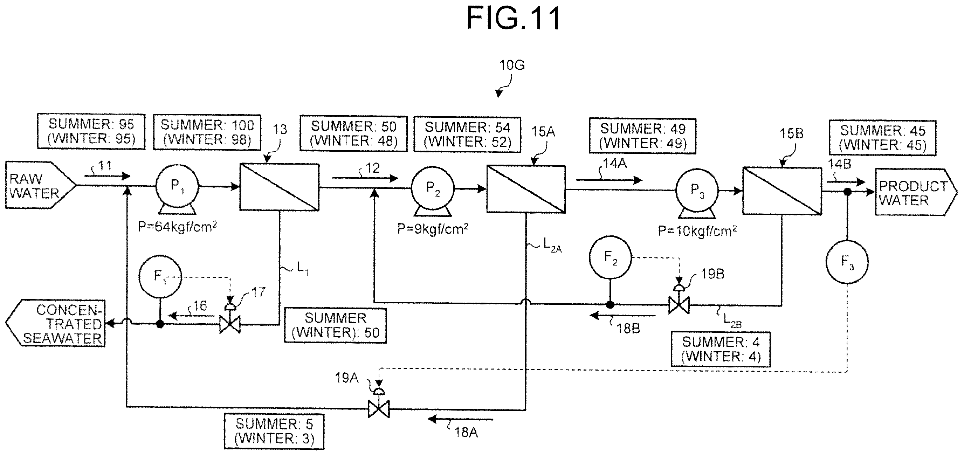

A desalination apparatus according to a seventh embodiment of the present invention will be described below with reference to the drawings. FIG. 11 is a schematic diagram of the desalination apparatus according to the seventh embodiment. The components identical to those of the desalination apparatus according to the first embodiment are denoted by identical reference numerals, and explanation thereof is not repeated.

As illustrated in FIG. 11, a desalination apparatus 10G according to the embodiment additionally includes, in the apparatus of the first embodiment, second and third reverse osmosis membrane devices 15A and 15B for low pressure use and arranged in series so as to be used as a sequential three-stag desalination treatment system. Second concentrated water 18A and 18B supplied from the second and the third reverse osmosis membrane devices 15A and 15B arranged in series are returned to the upstream side by second concentrated water lines L_{2A} and L_{2B}.

Because the first reverse osmosis membrane device 13 is a high-pressure device, switching between the summer mode and the winter mode is performed similarly to the first embodiment.

More specifically, when a decreased temperature of the raw water 11 is measured by a thermometer (not shown) (the temperatures decreases by 5°C or more than that in summer) and a winter state is confirmed, the first flow regulation valve 17 is regulated to reduce the recovery ratio for the first reverse osmosis membrane device 13 so that the amount of the raw water 11 to be supplied to the first reverse osmosis membrane device 13 becomes the supply amount of 98 units (95+3 units) so as to maintain the first concentrated water 16 constant. Accordingly, the filtered amount of the first permeated water 12 that is filtered through the RO membrane of the first reverse osmosis membrane device 13 is reduced to 48 units, so that the first concentrated water 16 of 50 units is obtained.

Furthermore, because the second reverse osmosis membrane device 15A and the third reverse osmosis membrane device 15B are low-pressure devices, switching between the summer mode and the winter mode is performed similarly to the first embodiment.

When a second flow regulation valve 19A is slightly closed so that the recovery amount for the second reverse osmosis membrane device 15A can be maintained to 49 units similarly to that in summer with respect to the supply amount of the first permeated water 12 to be supplied to the second reverse osmosis membrane device 15A, the filtered amount of second permeated water 14A that is filtered through the RO membrane of the second reverse osmosis membrane device 15A becomes 49 units, so that the second concentrated water 18A is reduced (5 units → 3 units).

Furthermore, when the recovery amount for the third reverse osmosis membrane device 15B is maintained to 45 units similarly to that in summer with respect to the supply amount of 49 units as the amount of the second permeated water 14A to be supplied to the third reverse osmosis membrane device 15B, the filtered amount of second permeated water 14B that is filtered through the RO membrane of the third reverse osmosis membrane device 15B becomes 45 units, so that the second concentrated water 18B of the same units (4 units) is obtained. In the drawing, the reference numeral 19B denotes a third flow regulation valve for returning the second concentrated water 18B to the upstream side.

As described above, when operating conditions are compared between summer (32°C) and winter (26°C), the treatment amount in winter is reduced compared to the treatment amount in summer by reducing the return amount of the second concentrated water 18A (5 units to 3 units) in winter.

Furthermore, it is possible to install a pressure control valve for example in the preceding stage of the reverse osmosis membrane device 15B in the third stage and adjust the supply amount of the second permeated water 14A to be supplied to the reverse osmosis membrane device 15B in the third stage so that the desalination treatment can be performed with improved system efficiency and energy efficiency.

### INDUSTRIAL APPLICABILITY

As described above, according to the desalination apparatus of the present invention, it is possible to perform desalination treatment with improved system efficiency and energy efficiency.

### EXPLANATIONS OF LETTERS OR NUMERALS

- 10A to 10G: desalination apparatus
- 11: raw water
- 12: first permeated water
- 13a, 15a: RO membrane
- 13: first reverse osmosis membrane device
- 14: second permeated water
- 15: second reverse osmosis membrane device
- 16: first concentrated water
- 17: first flow regulation valve
- 18: second concentrated water
- 19: second flow regulation valve
- 20: thermometer

## Claims

1. A desalination apparatus (10A; 10B; 10C; 10D; 10E; 10F; 10G) comprising:
a first pump (P1) configured to supply raw water (11);
a high-pressure first reverse osmosis membrane device (13) provided downstream of the first pump (P1), the high-pressure first reverse osmosis membrane device (13) having a first reverse osmosis membrane (13a) for removing a salt content from the raw water (11) supplied with predetermined pressure to produce first permeated water (12);
a second pump (P2) provided downstream of the high-pressure first reverse osmosis membrane device (13);
a low-pressure second reverse osmosis membrane device (15) provided downstream of the second pump (P2), the low-pressure second reverse osmosis membrane device (15) having a second reverse osmosis membrane (15a) for removing a salt content in the first permeated water supplied from the first reverse osmosis membrane device (13) to produce second permeated water (14);
a first flow regulation valve (17) that is mounted in a discharge line for discharging first concentrated water (16) supplied from the first reverse osmosis membrane device (13) and that is configured to regulate the flow rate of the first concentrated water (16);
a second flow regulation valve (19) that is mounted in a first return line (L2) for returning second concentrated water supplied from the second reverse osmosis membrane device (15) to upstream of the first pump (P1) and that is configured to regulate the flow rate of the second concentrated water (18);
a control device configured to measure a supply temperature of the raw water by a thermometer (20), and to control the first flow regulation valve (17) and the second flow regulation valve (19) depending on the measured temperature, wherein
when the measured temperature of the raw water is lower than a set temperature, the control device regulates the first flow regulation valve (17) to maintain a discharge amount of the first concentrated water constant and regulates the second flow regulation valve (19) to reduce the flow rate of the second concentrated water (18) to be returned so as to perform operation such that supply flow rate for the first reverse osmosis membrane device (13) is controlled to be lower than the supply flow rate of the raw water applied at an increased temperature and predetermined product water recovery ratio is maintained.

2. The desalination apparatus (10A; 10B; 10C; 10D; 10E; 10F; 10G) according to claim 1, further comprising a third flow regulation valve that is mounted in a second return line for returning a part of the second permeated water to a preceding stage of the second reverse osmosis membrane device (15) and that is configured to regulate the flow rate of the second permeated water.

3. The desalination apparatus (10A; 10B; 10C; 10D; 10E; 10F; 10G) according to claim 1, further comprising:
a third reverse osmosis membrane device (23) having a third reverse osmosis membrane (23a) for removing a salt content in the second concentrated water to produce third permeated water; and
a fourth flow regulation valve (24) that is mounted in a third return line for returning the third permeated water to a preceding stage of the second reverse osmosis membrane device (15) and that is configured to regulate flow rate of the third permeated water.

4. The desalination apparatus (10A; 10B; 10C; 10D; 10E; 10F; 10G) according to claim 1, further comprising a fifth flow regulation valve (25) that is mounted in a first bypass for guiding a part of the first permeated water to a subsequent stage of the second reverse osmosis membrane device (15) and that is configured to regulate the flow rate of the first permeated water.

5. The desalination apparatus (10A; 10B; 10C; 10D; 10E; 10F; 10G) according to any one of claims 1 to 4, further comprising:
a first manual valve (31) that is installed in a preceding stage of the first reverse osmosis membrane device (13) and that is configured to allow manual regulation of flow rate at the initial time of activation start;
a second manual valve (32) that is installed in a preceding stage of the second reverse osmosis membrane device (15) and that is configured to allow manual regulation of flow rate at the initial time of activation start; and
a three-way valve (33) that is installed between the first reverse osmosis membrane device (13) and the second manual valve (32) and that is configured to perform water discharge treatment until predetermined pressure is obtained at the initial time of activation start.

6. The desalination apparatus (10A; 10B; 10C; 10D; 10E; 10F; 10G) according to any one of claims 1 to 5, further comprising an energy recovery device that is mounted in a line for discharging the first concentrated water and that is configured to recover pressure.

7. The desalination apparatus (10A; 10B; 10C; 10D; 10E; 10F; 10G) according to any one of claims 1 to 6, further comprising a low-pressure reverse osmosis membrane device arranged in series in a subsequent stage of the low-pressure second reverse osmosis membrane device (15).

8. The desalination apparatus (10A; 10B; 10C; 10D; 10E; 10F; 10G) according to claim 1, further comprising:
a flow meter (F₃) for measuring a flow rate of the second concentrated water; and
a flow control unit (26) configured to control the second flow regulation valve (19) based on a measurement result of the flow meter (F₃).

9. A desalination method implemented by a high-pressure first reverse osmosis membrane device (13) and a low-pressure second reverse osmosis membrane device (15) arranged in series for performing desalination treatment on raw water, the desalination method being **characterized in that** it comprises:
measuring a supply temperature of the raw water, wherein,
when the supply temperature of the raw water is lower than a set value, the method further includes
maintaining a discharge amount of a first concentrated water supplied from the first reverse osmosis membrane device (13) constant; and
reducing a flow rate of a second concentrated water supplied from the second reverse osmosis membrane device (15) so as to perform operation such that supply flow rate of the raw water (11) for the first reverse osmosis membrane device (13) is controlled to be lower than flow rate used at an increased temperature and predetermined product water recovery ratio is maintained.

10. The desalination method according to claim 9, further comprising:
returning a part of second permeated water supplied from the second reverse osmosis membrane device (15) to a preceding stage of the second reverse osmosis membrane device (15); and
regulating flow rate for returning the second permeated water depending on a temperature difference.

11. The desalination method according to claim 9, wherein
the reverse osmosis membrane devices include a third reverse osmosis membrane device (23) having a third reverse osmosis membrane that removes a salt content in the second concentrated water to produce third permeated water,
the desalination method further comprising:
returning the third permeated water to a preceding stage of the second reverse osmosis membrane device (15); and
regulating flow rate for returning third concentrated water depending on a temperature difference.

12. The desalination method according to claim 9, further comprising:
sending a part of the first permeated water from the first reverse osmosis membrane device (13) to a subsequent stage of the second reverse osmosis membrane device (15); and
regulating flow rate for sending the first permeated water depending on a temperature difference.

13. The desalination method according to claim 9, further comprising:
providing a flow meter (F₃) for measuring a flow rate of the second concentrated water supplied from the low-pressure second reverse osmosis membrane device (15); and
controlling a second flow regulation valve (19) based on a measurement result of the flow meter (F₃).

## Patentansprüche

1. Entsalzungsvorrichtung (10A; 10B; 10C; 10D; 10E; 10F; 10G), umfassend:
eine erste Pumpe (P1), die dazu konfiguriert ist, Rohwasser (11) zuzuführen,
eine erste Hochdruck-Umkehrosmosemembranvorrichtung (13), die stromabwärts der ersten Pumpe (P1) angeordnet ist, wobei die erste Hochdruck-Umkehrosmosemembranvorrichtung (13) eine erste Umkehrosmosemembran (13a) aufweist, um einen Salzgehalt aus dem mit einem zuvor festgelegten Druck zugeführten Rohwasser (11) zu entfernen, um erstes permeiertes Wasser (12) herzustellen,
eine zweite Pumpe (P2), die stromabwärts der ersten Hochdruck-Umkehrosmosemembranvorrichtung (13) angeordnet ist,
eine zweite Niederdruck-Umkehrosmosemembranvorrichtung (15), die stromabwärts der zweiten Pumpe (P2) angeordnet ist, wobei die zweite Niederdruck-Umkehrosmosemembranvorrichtung (15) eine zweite Umkehrosmosemembran (15a) aufweist, um einen Salzgehalt in dem von der ersten Umkehrosmosemembranvorrichtung (13) zugeführten ersten permeierten Wasser zu entfernen, um zweites permeiertes Wasser (14) herzustellen,
ein erstes Durchflussmengenregelventil (17), das in einer Ablassleitung zum Ablassen von erstem konzentrierten Wasser (16), das von der ersten Umkehrosmosemembranvorrichtung (13) zugeführt wird, montiert ist und das dafür konfiguriert ist, die Durchflussrate des ersten konzentrierten Wassers (16) zu regulieren,
ein zweites Durchflussmengenregelventil (19), das in einer ersten Rücklaufleitung (L2) montiert ist, um zweites konzentriertes Wasser, das von der zweiten Umkehrosmosemembranvorrichtung (15) zugeführt wird, nach stromaufwärts der ersten Pumpe (P1) zurückzuführen, und das dafür konfiguriert ist, die Durchflussrate des zweiten konzentrierten Wassers (18) zu regulieren,
eine Steuervorrichtung, die dafür konfiguriert ist, eine Zulauftemperatur des Rohwassers durch ein Thermometer (20) zu messen und das erste Durchflussmengenregelventil (17) und das zweite Durchflussmengenregelventil (19) in Abhängigkeit von der gemessenen Temperatur zu steuern, wobei
wenn die gemessene Temperatur des Rohwassers niedriger ist als eine Solltemperatur, die Steuervorrichtung das erste Durchflussmengenregelventil (17) so reguliert, dass eine Ablassmenge des ersten konzentrierten Wassers konstant gehalten wird, und das zweite Durchflussmengenregelventil (19) so reguliert, dass die Durchflussrate des zurückzuführenden zweiten konzentrierten Wassers (18) reduziert wird, um einen Betrieb auszuführen, bei dem die Zulaufströmungsrate für die erste Umkehrosmosemembranvorrichtung (13) so gesteuert wird, dass sie niedriger ist als die Zulaufströmungsrate des Rohwassers, das mit einer erhöhten Temperatur zugeführt wird, und ein zuvor festgelegtes Produktwasserrückgewinnungsverhältnis beibehalten wird.

2. Entsalzungsvorrichtung (10A; 10B; 10C; 10D; 10E; 10F; 10G) nach Anspruch 1, die ferner ein drittes Durchflussmengenregelventil umfasst, das in einer zweiten Rücklaufleitung montiert ist, um einen Teil des zweiten permeierten Wassers zu einer vorangehenden Stufe der zweiten Umkehrosmosemembranvorrichtung (15) zurückzuführen, und das dafür konfiguriert ist, die Durchflussrate des zweiten permeierten Wassers zu regulieren.

3. Entsalzungsvorrichtung (10A; 10B; 10C; 10D; 10E; 10F; 10G) nach Anspruch 1, die ferner umfasst:
eine dritte Umkehrosmosemembranvorrichtung (23) mit einer dritten Umkehrosmosemembran (23a) zum Entfernen eines Salzgehalts in dem zweiten konzentrierten Wasser, um drittes permeiertes Wasser herzustellen, und
ein viertes Durchflussmengenregelventil (24), das in einer dritten Rücklaufleitung montiert ist, um das dritte permeierte Wasser zu einer vorangehenden Stufe der zweiten Umkehrosmosemembranvorrichtung (15) zurückzuführen, und das dafür konfiguriert ist, die Durchflussrate des dritten permeierten Wassers zu regulieren.

4. Entsalzungsvorrichtung (10A; 10B; 10C; 10D; 10E; 10F; 10G) nach Anspruch 1, die ferner ein fünftes Durchflussmengenregelventil (25) umfasst, das in einer ersten Umgehungsleitung montiert ist, um einen Teil des ersten permeierten Wassers zu einer nachfolgenden Stufe der zweiten Umkehrosmosemembranvorrichtung (15) zu leiten, und das dafür konfiguriert ist, die Durchflussrate des ersten permeierten Wassers zu regulieren.

5. Entsalzungsvorrichtung (10A; 10B; 10C; 10D; 10E; 10F; 10G) nach einem der Ansprüche 1 bis 4, ferner umfassend:
ein erstes manuelles Ventil (31), das in einer vorangehenden Stufe der ersten Umkehrosmosemembranvorrichtung (13) installiert ist und das dafür konfiguriert ist, eine manuelle Regulierung der Durchflussrate am Anfangszeitpunkt des Aktivierungsbeginns zu erlauben,
ein zweites manuelles Ventil (32), das in einer vorangehenden Stufe der zweiten Umkehrosmosemembranvorrichtung (15) installiert ist und das dafür konfiguriert ist, eine manuelle Regulierung der Durchflussrate am Anfangszeitpunkt des Aktivierungsbeginns zu erlauben, und
ein Dreiwegventil (33), das zwischen der ersten Umkehrosmosemembranvorrichtung (13) und dem zweiten manuellen Ventil (32) installiert ist und das dafür konfiguriert ist, eine Wasserablassbehandlung auszuführen, bis ein zuvor festgelegter Druck am Anfangszeitpunkt des Aktivierungsbeginns erhalten wird.

6. Entsalzungsvorrichtung (10A; 10B; 10C; 10D; 10E; 10F; 10G) nach einem der Ansprüche 1 bis 5, die ferner eine Energierückgewinnungsvorrichtung umfasst, die in einer Leitung zum Ablassen des ersten konzentrierten Wassers montiert ist und dafür konfiguriert ist, Druck zurückzugewinnen.

7. Entsalzungsvorrichtung (10A; 10B; 10C; 10D; 10E; 10F; 10G) nach einem der Ansprüche 1 bis 6, die ferner eine Niederdruck-Umkehrosmosemembranvorrichtung umfasst, die in Reihe in einer nachfolgenden Stufe der zweiten Niederdruck-Umkehrosmosemembranvorrichtung (15) angeordnet.

8. Entsalzungsvorrichtung (10A; 10B; 10C; 10D; 10E; 10F; 10G) nach Anspruch 1, ferner umfassend:
ein Durchflussmessgerät (F₃) zum Messen einer Durchflussrate des zweiten konzentrierten Wassers und
eine Durchflussmengensteuereinheit (26), die dafür konfiguriert ist, das zweite Durchflussmengenregelventil (19) anhand eines Messergebnisses des Durchflussmessgerätes (F₃) zu steuern.

9. Entsalzungsverfahren, das durch eine erste Hochdruck-Umkehrosmosemembranvorrichtung (13) und eine zweite Niederdruck-Umkehrosmosemembranvorrichtung (15) implementiert wird, die in Reihe angeordnet sind, zum Ausführen einer Entsalzungsbehandlung von Rohwasser, wobei das Entsalzungsverfahren **dadurch gekennzeichnet ist, dass** es umfasst:
Messen einer Zulauftemperatur des Rohwassers, wobei,
wenn die Zulauftemperatur des Rohwassers niedriger ist als ein Sollwert, das Verfahren ferner enthält:
Konstanthalten einer Ablassmenge eines ersten konzentrierten Wassers, das von der ersten Umkehrosmosemembranvorrichtung (13) zugeführte wird, und
Reduzieren einer Durchflussrate eines zweiten konzentrierten Wassers, das von der zweiten Umkehrosmosemembranvorrichtung (15) zugeführt wird, um einen Betrieb auszuführen, bei dem die Zulaufströmungsrate des Rohwassers (11) für die erste Umkehrosmosemembranvorrichtung (13) so gesteuert wird, dass sie niedriger ist als die Durchflussrate, die bei einer erhöhten Temperatur verwendet wird, und ein zuvor festgelegtes Produktwasserrückgewinnungsverhältnis beibehalten wird.

10. Entsalzungsverfahren nach Anspruch 9, ferner umfassend:
Zurückführen eines Teils von zweitem permeierten Wasser, das von der zweiten Umkehrosmosemembranvorrichtung (15) zugeführt wird, zu einer vorangehenden Stufe der zweiten Umkehrosmosemembranvorrichtung (15), und
Regulieren der Durchflussrate zum Zurückführen des zweiten permeierten Wassers in Abhängigkeit von einer Temperaturdifferenz.

11. Entsalzungsverfahren nach Anspruch 9, wobei
die Umkehrosmosemembranvorrichtungen eine dritte Umkehrosmosemembranvorrichtung (23) enthalten, die eine dritte Umkehrosmosemembran enthält, die einen Salzgehalt in dem zweiten konzentrierten Wasser entfernt, um drittes permeierten Wasser herzustellen,
wobei das Entsalzungsverfahren ferner umfasst:
Zurückführen des dritten permeierten Wassers zu einer vorangehenden Stufe der zweiten Umkehrosmosemembranvorrichtung (15) und
Regulieren der Durchflussrate zum Zurückführen von drittem konzentrierten Wasser in Abhängigkeit von einer Temperaturdifferenz.

12. Entsalzungsverfahren nach Anspruch 9, ferner umfassend:
Senden eines Teils des ersten permeierten Wassers von der ersten Umkehrosmosemembranvorrichtung (13) zu einer nachfolgenden Stufe der zweiten Umkehrosmosemembranvorrichtung (15) und
Regulieren der Durchflussrate zum Senden des ersten permeierten Wassers in Abhängigkeit von einer Temperaturdifferenz.

13. Entsalzungsverfahren nach Anspruch 9, ferner umfassend:
Bereitstellen eines Durchflussmessgerätes (F₃) zum Messen einer Durchflussrate des zweiten konzentrierten Wassers, das von der zweiten Niederdruck-Umkehrosmosemembranvorrichtung (15) zugeführt wird, und
Steuern eines zweiten Durchflussmengenregelventils (19) anhand eines Messergebnisses des Durchflussmessgerätes (F₃).

## Revendications

1. Dispositif de dessalement (10A; 10B ; 10C ; 10D ; 10E ; 10F ; 10G) comprenant :
une première pompe (P1) configurée pour délivrer de l'eau non traitée (11) ;
un premier dispositif à membrane d'osmose inverse à haute pression (13) prévu en aval de la première pompe (P1), le premier dispositif à membrane d'osmose inverse à haute pression (13) ayant une première membrane d'osmose inverse (13a) pour retirer une teneur en sel de l'eau non traitée (11) délivrée avec une pression prédéterminée pour produire une première eau de perméation (12) ;
une deuxième pompe (P2) prévue en aval du premier dispositif à membrane d'osmose inverse à haute pression (13) ;
un deuxième dispositif à membrane d'osmose inverse à basse pression (15) prévu en aval de la deuxième pompe (P2), le deuxième dispositif à membrane d'osmose inverse à basse pression (15) ayant une deuxième membrane d'osmose inverse (15a) pour retirer une teneur en sel dans la première eau de perméation délivrée par le premier dispositif à membrane d'osmose inverse (13) pour produire une deuxième eau de perméation (14) ;
une première vanne de régulation d'écoulement (17) qui est montée dans une conduite d'évacuation pour évacuer une première eau concentrée (16) délivrée par le premier dispositif à membrane d'osmose inverse (13) et qui est configurée pour réguler le débit de la première eau concentrée (16) ;
une deuxième vanne de régulation d'écoulement (19) qui est montée dans une première conduite de retour (L2) pour retourner une deuxième eau concentrée délivrée par le deuxième dispositif à membrane d'osmose inverse (15) vers l'amont de la première pompe (P1) et qui est configurée pour réguler le débit de la deuxième eau concentrée (18) ;
un dispositif de commande configuré pour mesurer une température d'alimentation de l'eau non traitée à l'aide d'un thermomètre (20), et pour commander la première vanne de régulation d'écoulement (17) et la deuxième vanne de régulation d'écoulement (19) en fonction de la température mesurée, dans lequel
quand la température mesurée de l'eau non traitée est inférieure à une température de consigne, le dispositif de commande régule la première vanne de régulation d'écoulement (17) pour maintenir constante une quantité de rejet de la première eau concentrée et régule la deuxième vanne de régulation d'écoulement (19) pour réduire le débit de la deuxième eau concentrée (18) devant être retournée de façon à réaliser un fonctionnement tel qu'un débit d'alimentation pour le premier dispositif à membrane d'osmose inverse (13) est commandé pour être inférieur au débit d'alimentation de l'eau non traitée appliquée à une température accrue et qu'un taux de récupération d'eau produite prédéterminée est maintenu.

2. Dispositif de dessalement (10A ; 10B ; 10C ; 10D ; 10E ; 10F ; 10G) selon la revendication 1, comprenant en outre une troisième vanne de régulation d'écoulement qui est montée dans une deuxième conduite de retour pour renvoyer une partie de la deuxième eau de perméation vers un étage précédent du deuxième dispositif à membrane d'osmose inverse (15) et qui est configurée pour réguler le débit de la deuxième eau de perméation.

3. Dispositif de dessalement (10A; 10B ; 10C ; 10D ; 10E ; 10F ; 10G) selon la revendication 1, comprenant en outre :
un troisième dispositif à membrane d'osmose inverse (23) ayant une troisième membrane d'osmose inverse (23a) pour retirer une teneur en sel dans la deuxième eau concentrée pour produire une troisième eau de perméation ; et
une quatrième vanne de régulation d'écoulement (24) qui est montée dans une troisième conduite de retour pour renvoyer la troisième eau de perméation vers un étage précédent du deuxième dispositif à membrane d'osmose inverse (15) et qui est configurée pour réguler le débit de la troisième eau de perméation.

4. Dispositif de dessalement (10A; 10B ; 10C ; 10D ; 10E ; 10F ; 10G) selon la revendication 1, comprenant en outre une cinquième vanne de régulation d'écoulement (25) qui est montée dans une première dérivation pour guider une partie de la première eau de perméation vers un étage suivant du deuxième dispositif à membrane d'osmose inverse (15) et qui est configurée pour réguler le débit de la première eau de perméation.

5. Dispositif de dessalement (10A ; 10B ; 10C ; 10D ; 10E ; 10F ; 10G) selon l'une quelconque des revendications 1 à 4, comprenant en outre :
une première vanne manuelle (31) qui est installée dans un étage précédent du premier dispositif à membrane d'osmose inverse (13) et qui est configurée pour permettre une régulation manuelle du débit au temps initial de début d'activation ;
une deuxième vanne manuelle (32) qui est installée dans un étage précédent du deuxième dispositif à membrane d'osmose inverse (15) et qui est configurée pour permettre une régulation manuelle du débit au temps initial de début d'activation ; et
un robinet à trois voies (33) qui est installé entre le premier dispositif à membrane d'osmose inverse (13) et la deuxième vanne manuelle (32) et qui est configuré pour réaliser un traitement de rejet d'eau jusqu'à ce qu'une pression prédéterminée soit obtenue au temps initial de début d'activation.

6. Dispositif de dessalement (10A; 10B ; 10C ; 10D ; 10E ; 10F ; 10G) selon l'une quelconque des revendications 1 à 5, comprenant en outre un dispositif de récupération d'énergie qui est monté dans une conduite pour l'évacuation de la première eau concentrée et qui est configuré pour récupérer de la pression.

7. Dispositif de dessalement (10A ; 10B ; 10C ; 10D ; 10E ; 10F ; 10G) selon l'une quelconque des revendications 1 à 6, comprenant en outre un dispositif à membrane d'osmose inverse à basse pression (15) disposé en série dans un étage suivant du deuxième dispositif à membrane d'osmose inverse à basse pression (15).

8. Dispositif de dessalement (10A ; 10B ; 10C ; 10D ; 10E ; 10F ; 10G) selon la revendication 1, comprenant en outre :
un débitmètre (F₃) destiné à mesurer un débit de la deuxième eau concentrée ; et
une unité de commande d'écoulement (26) configurée pour commander la deuxième vanne de régulation d'écoulement (19) sur la base d'un résultat de mesure du débitmètre (F₃).

9. Procédé de dessalement mis en oeuvre par un premier dispositif à membrane d'osmose inverse à haute pression (13) et un deuxième dispositif à membrane d'osmose inverse à basse pression (15) disposés en série pour réaliser un traitement de dessalement sur de l'eau non traitée, le procédé de dessalement étant **caractérisé en ce qu'**il comprend le fait de :
mesurer une température d'alimentation de l'eau non traitée, dans lequel,
quand la température d'alimentation de l'eau non traitée est inférieure à une valeur de consigne, le procédé comprend en outre le fait de
maintenir constante une quantité de rejet d'une première eau concentrée délivrée par le premier dispositif à membrane d'osmose inverse (13) ; et
réduire un débit d'une deuxième eau concentrée délivrée par le deuxième dispositif à membrane d'osmose inverse (15) de façon à réaliser un fonctionnement tel qu'un débit d'alimentation de l'eau non traitée (11) pour le premier dispositif à membrane d'osmose inverse (13) est commandé pour être inférieur à un débit utilisé à une température accrue et qu'un taux de récupération d'eau de produit prédéterminé est maintenu.

10. Procédé de dessalement selon la revendication 9, comprenant en outre le fait de :
renvoyer une partie de la deuxième eau de perméation délivrée par le deuxième dispositif à membrane d'osmose inverse (15) vers un étage précédent du deuxième dispositif à membrane d'osmose inverse (15) ; et
réguler un débit pour renvoyer la deuxième eau de perméation en fonction d'une différence de température.

11. Procédé de dessalement selon la revendication 9, dans lequel
les dispositifs à membrane d'osmose inverse comprennent un troisième dispositif à membrane d'osmose inverse (23) ayant une troisième membrane d'osmose inverse qui retire une teneur en sel dans la deuxième eau concentrée pour produire une troisième eau de perméation,
le procédé de dessalement comprenant en outre le fait de :
renvoyer la troisième eau de perméation vers un étage précédent du deuxième dispositif à membrane d'osmose inverse (15) ; et
réguler un débit pour renvoyer une troisième eau concentrée en fonction d'une différence de température.

12. Procédé de dessalement selon la revendication 9, comprenant en outre le fait de :
envoyer une partie de la première eau de perméation du premier dispositif à membrane d'osmose inverse (13) à un étage suivant du deuxième dispositif à membrane d'osmose inverse (15) ; et
réguler un débit pour envoyer la première eau de perméation en fonction d'une différence de température.

13. Procédé de dessalement selon la revendication 9, comprenant en outre le fait de :
prévoir un débitmètre (F₃) pour mesurer un débit de la deuxième eau concentrée délivrée par le deuxième dispositif à membrane d'osmose inverse à basse pression (15) ; et
commander une deuxième vanne de régulation d'écoulement (19) sur la base d'un résultat de mesure du débitmètre (F₃).
